# EUROPEAN PATENT SPECIFICATION

(11) **EP 2 297 900 B1**
(45) Date of publication and mention of the grant of the patent: **04.06.2014**
(21) Application number: 08785910.4
(22) Date of filing: 03.07.2008
(51) Int. Cl.: H04L 12/24

(54) **COMMUNICATING CONFIGURATION INFORMATION IN A COMMUNICATIONS NETWORK**
ÜBERMITTELN VON KONFIGURATIONSINFORMATIONEN IN EINEM KOMMUNIKATIONSNETZ
COMMUNICATION D'INFORMATIONS DE CONFIGURATION DANS UN RÉSEAU DE COMMUNICATION

(43) Date of publication of application: 23.03.2011
(73) Proprietor: Telefonaktiebolaget L M Ericsson (PUBL), 164 83 Stockholm (SE)
(72) Inventor: KLEIN, Mikael, Lars, S-SE-141 31 Huddinge (SE); LASSBORN, Sofie, S-SE-112 62 Stockholm (SE); LINDGREN, Anders, S-SE-125 74 Älvsjö (SE)
(74) Representative: Blake, Stephen James
(86) International application number: PCT/EP2008/058587
(87) International publication number: WO 2010/000319

(56) References cited:
- EP-A- 1 376 932
- WO-A-2007/048339
- US-A1- 2005 203 953
- YASUHIRO ARAKI ET AL: "Dynamic Community Entertainment Services Composition on Next Generation Mobile Network IP Multimedia Subsystem" APPLICATIONS AND THE INTERNET WORKSHOPS, 2007. SAINT WORKSHOPS 2007. I NTERNATIONAL SYMPOSIUM ON, IEEE, PI, 1 January 2007 (2007-01-01), pages 1-4, XP031044097 ISBN: 978-0-7695-2757-4

## Description

### Technical field

The present invention relates to a method and apparatus for communicating configuration information to a communications network service that is scaled over a plurality of network nodes. Such a method and apparatus is particularly but not exclusively applicable to a Universal Mobile Telecommunications System having an IP Multimedia Subsystem.

### Background

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to subscribers. UMTS is standardised by the 3rd Generation Partnership Project (3GPP). See 3GPP TS 23.002 for more details.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The

Session Description Protocol (SDP), carried by SIP signalling, is used to describe and negotiate the media components of the session. The 3GPP has chosen SIP for signalling between a User Equipment (UE) and the IMS as well as between the components within the IMS.

Specific details of the operation of the UMTS communications network and of the various components within such a network can be found from the Technical Specifications for UMTS that are available from http://www.3gpp.org. Further details of the use of SIP within UMTS can be found from the 3GPP Technical Specification TS 24.229 V8.2.0 (2007-12).

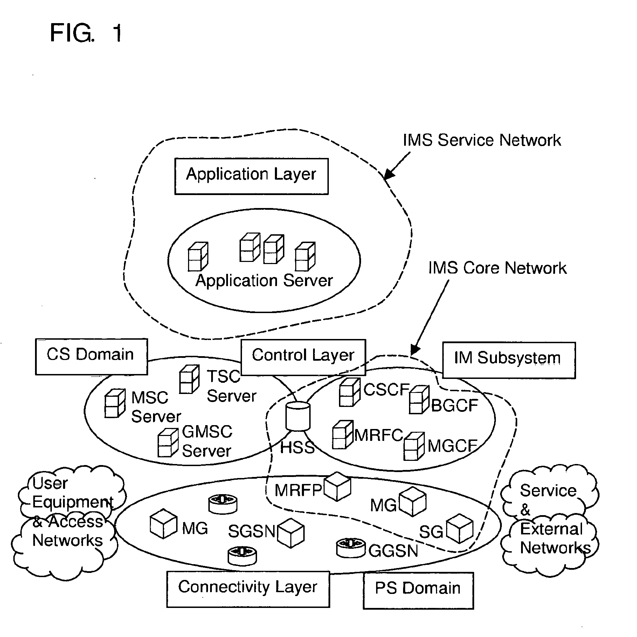

Figure 1 illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

Within the IMS service network, Application Servers (ASs) are provided for implementing IMS service functionality. Generally, Application Servers and core services of an IMS network need to be runtime configurable. In IMS networks with high loads of traffic, Application Servers and core services may have to be scaled over several nodes. When a service is scaled over several nodes, each node will still need to be configured.

A node can, in this context, be one physical server or several physical servers joined in a cluster. Generally each server would be configured independently from a central Network Management Server (NMS), and the applicant has appreciated the desirability of providing a more efficient implementation from a technical perspective.

US 2005/203953 discloses a method and apparatus for maintaining compatibility within a distributed systems management environment with a plurality of configuration versions.

An article entitled "Dynamic Community Entertainment Services Composition on Next Generation Mobile Network IP Multimedia Subsystem" by Yasuhiro Araki et al (Proceedings of the 2007 Symposium on Applications and the Internet Workshops; ISBN 978-0-7695-2757-4) explores the feasibility of using Services Capability Interaction Management based design to provide community based and context specific mobile services using standard IMS components and enabler technologies.

### Summary

According to a first aspect of the present invention there is provided a method of communicating configuration information to a network service that is scaled over a plurality of network nodes, comprising designating one of the nodes of the plurality as a master node, providing an XML Document Manager Server, XDMS, function in the master node, arranging for the configuration information to be provided to the XDMS function in the master node, arranging for the XDMS function in the master node to communicate the configuration information to the non-master nodes, or at least any of the configuration information that is relevant to them, such that configuration can be performed in each node of the plurality based on the configuration information, and using the Session Initiation Protocol, SIP, event notification framework for notifying each of the non-master nodes of receipt at the master node of the configuration information.

The method may comprise notifying each of the non-master nodes of receipt of the configuration information, and subsequently providing the configuration information on request.

The method may comprise subscribing each of the non-master nodes to receive a notification from the XDMS function in the master node following receipt at the master node of the configuration information, for example by using SUBSCRIBE and NOTIFY messages.

The method may comprise using the "xcap-diff' event package relating to the XML Configuration Access Protocol, XCAP.

The method may comprise using an XML Configuration Access Protocol, XCAP, procedure for communicating the configuration information from the XDMS function in the master node to each of the non-master nodes, for example using an XCAP GET message.

The method may comprise, for use in the XCAP procedure, allocating each non-master node its own SIP address and informing it of the root URI to the XDMS function in the master node.

The configuration information may comprise updates to previously-received configuration information.

The XDMS function may be arranged to handle a plurality of different services, and comprising differentiating the services with reference to Application Unique Identifiers, AUIDs, associated with the respective services.

The XDMS function may be arranged to handle a plurality of different nodes/users, and comprising differentiating the nodes/users with reference to XCAP User Identifiers, XUIs, associated with the respective nodes/users, optionally also with reference to a document name associated with the node/user.

The master node may comprise a plurality of nodes.

The configuration information may comprise performance and/or fault management information.

The network service may be provided in an IMS network.

According to a second aspect of the present invention there is provided a method of configuring a network service that is scaled over a plurality of network nodes, comprising using a method according to the first aspect of the present invention to communicate configuration information to the nodes, and configuring the nodes in dependence upon that information.

According to a third aspect of the present invention there is provided an apparatus for use as or in a designated master node of a network service that is scaled over a plurality of nodes, the apparatus comprising an XML Document Manager Server, XDMS, function arranged to receive configuration information relating to the network service on behalf of all nodes of the plurality and further arranged to communicate the configuration information to the non-master nodes of the network service, or at least any of the configuration information that is relevant to them, and the apparatus being adapted to function as a master node in the manner as defined above.

According to a fourth aspect of the present invention there is provided an apparatus for use as or in a non-master node of a network service that is scaled over a plurality of nodes, one of the other nodes of the plurality being designated as a master node, the apparatus comprising an XML Document Manager Client, XDMC, function, the XDMC function being arranged to receive configuration information from an XML Document Manager Server, XDMS, function provided in the master node of the network service, and to arrange for a configuration of the non-master node to be performed based on the received configuration information, wherein the XDMC function is arranged to use the Session Initiation Protocol, SIP, event notification framework for being notified of receipt at the XDMS function of the configuration information, and the apparatus being adapted to function as a non-master node in the manner as defined above.

According to a fifth aspect of the present invention there is provided a program for controlling an apparatus to perform a method according to the first or second aspect of the present invention or which, when loaded into an apparatus, causes the apparatus to become a system or an apparatus according to the third, fourth or fifth aspect of the present invention. The program may be carried on a carrier medium. The carrier medium may be a storage medium. The carrier medium may be a transmission medium.

According to a sixth aspect of the present invention there is provided an apparatus programmed by a program according to the sixth aspect of the present invention. According to a seventh aspect of the present invention there is provided a storage medium containing a program according to the sixth aspect of the present invention.

An embodiment of the present invention has an advantage associated with it in addressing an issue mentioned above.

### Brief description of the drawings

Figure 1, discussed hereinbefore, illustrates schematically the integration of an IP Multimedia Subsystem into a 3G mobile communications system;
Figure 2 is a message exchange diagram for illustrating the setting up of a system embodying the present invention for configuration updates with a scaled service;
Figure 3 is a message exchange diagram for illustrating a configuration update procedure in an embodiment of the present invention;
Figure 4 is a schematic flowchart providing an overview of steps performed in an embodiment of the present invention; and
Figure 5 is a schematic illustration of apparatus embodying the present invention.

### Detailed description

As mentioned above, in a scenario in which a service in an IMS network is scaled over several nodes, where a node may be one physical server or several physical servers joined in a cluster, each node needs to be configured and also subsequently reconfigured with configuration updates. There is currently no standard for how to spread configuration changes over several nodes; each server is generally configured independently from a central Network Management Server (NMS), and configuration data are duplicated in each server.

The Open Mobile Alliance (OMA) Architecture Document "XML Document Management Architecture" (OMA-AD-XDM-V2_0, currently at OMA-AD-XDM-V2_0-20080617-D) describes the features and architecture of the "XML Document Management enabler" as follows.

"The XDM enabler defines a common mechanism that makes user-specific service-related information accessible to the service enablers that need them. Such information is expected to be stored in the network where it can be located, accessed and manipulated (e.g. created, changed, deleted, etc.). XDM specifies how such information will be defined in well-structured XML documents, as well as the common protocol for access and manipulation of such XML documents.

The XDM Specification ["XML Document Management (XDM) Specification" from the Open Mobile Alliance, OMA-TS-XDM_Core-V2_0, currently at OMA-TS-XDM_Core-V2_0-20080606-D] defines the features of the XDM enabler, which include the following:
- The common protocol, XML Configuration Access Protocol (XCAP) [IETF RFC4825: "The Extensible Markup Language (XML) Configuration Access protocol (XCAP) ", J. Rosenberg, May 2007], by which Principals can store and manipulate their service-related data, stored in a network as XML documents.
- The SIP subscription/notification mechanism by which Principals can be notified of changes to such documents.
- The mechanism by which Principals can search service-related data stored in a network as XML documents using limited XQuery [W3C Recommendation "XQuery 1.0: An XML Query Language", Scott Boag et al, January 23 2007, World Wide Web Consortium (W3C)].

Documents accessed and manipulated via XCAP are stored in logical repositories in the network, called XDMS. Each repository may be associated with a functional entity which uses its data to perform its functions.

Each XML document stored in an XDMS is described as an XCAP Application Usage, which enables applications to use the document via XCAP. The XDM enabler describes Application Usages which can be reused by multiple enablers and are stored in the Shared XDMSs, of which there are four types: Shared List XDMS, Shared Group XDMS, Shared Policy XDMS and Shared Profile XDMS. The documents supported by these XDMSs are as follows:
- URI List and Group Usage List documents in the Shared List XDMS ["Shared List XDM Specification ", Version 2.0, Open Mobile Alliance, OMA-TS-XDM_Shared-V2_0];
- Group document in the Shared Group XDMS ["Shared Group XDM Specification", Version 1.0, Open Mobile Alliance, OMA-TS-XDM_Shared_Group-V1_0];
- User access policy document in the Shared Policy XDMS ["Shared Policy XDM Specification", Version 1.0, Open Mobile Alliance, OMA-TS-XDM_Shared_Policy-V1_0]; and
- User Profile document in the Shared Profile XDMS ["Shared Profile XDM Specification", Version 1.0, Open Mobile Alliance, OMA-TS-XDM_Shared_Profile-V1_0].

In addition to above documents the XDM Enabler also defines the Extended Group Advertisement.

Due to the reusable nature of the XDM enabler, there will be interactions with other service enablers, and therefore, the architectural design of the XDM enabler accommodates the needs of those enablers."

The XML Document Manager (XDM) provides an architecture for managing service specific data. The XML Document Management defines a common mechanism that makes user-specific service-related information accessible to the service enablers that need them. The service-specific information is expressed and exchanged by means of XML documents, and this information is stored in the network where it can be located, accessed and manipulated (created, changed, deleted, etc.). The network entity assumed responsible for storing and manipulation of such information is the XDM Server (XDMS).

An embodiment of the present invention provides a method of communicating configuration changes to a network service that is scaled over a plurality of network nodes. One of the nodes of the service is designated as a master node and that master node is provided with an XML Document Manager Server (XDMS) function (referred to herein as the "Config XDMS"). The Config XDMS holds configuration data for all nodes of the scaled service in XML format. The Config XDMS can hold both configuration data that are common for many services/nodes/users, and configuration data that are specific for a particular service/node/user.

Where a configuration update is to be applied to the scaled service, it is arranged that the configuration update is sent to the Config XDMS in the master node, and it is arranged that the Config XDMS in the master node notifies the other nodes (Config XDMS clients) of the configuration update, or at least any parts of the configuration update relevant to them, such that the configuration update can be applied to all nodes as required.

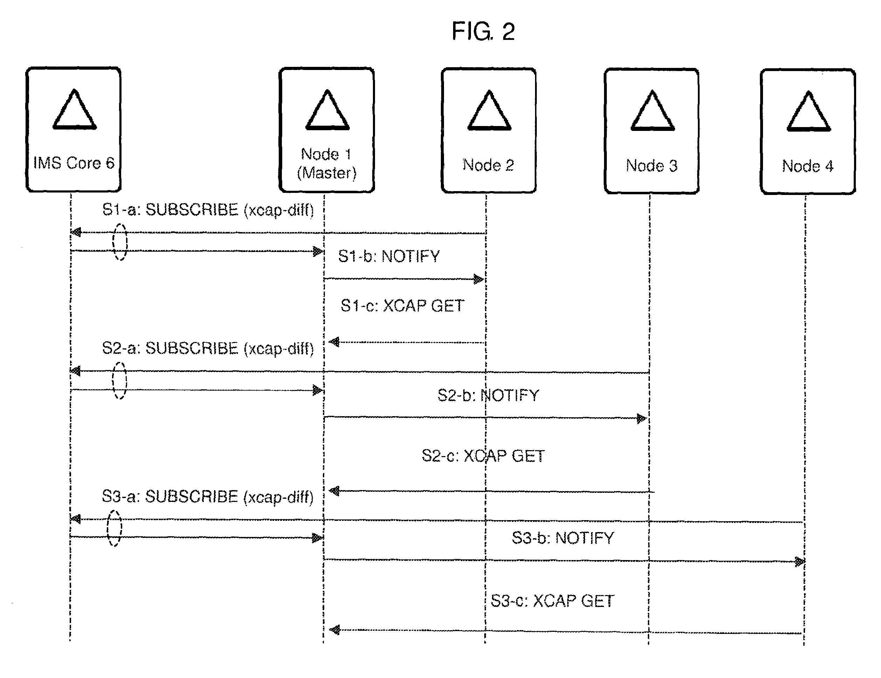

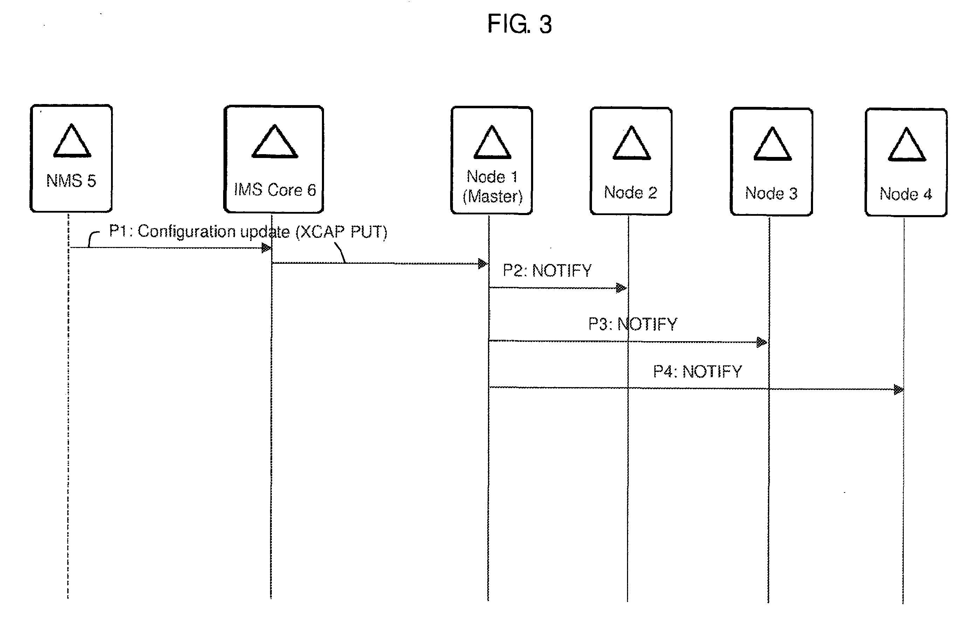

For example, nodes other than the master node can be provided with SIP clients subscribing to changes in the configuration data stored in the Config XDMS. In one particular embodiment of the present invention, the "xcap-diff" SIP event [draft-ietf-sip-xcapevent "An Extensible Markup Language (XML) Configuration Access Protocol (XCAP) Diff Event Package"] is used for distribution of configuration data between nodes, and this embodiment is illustrated in Figures 2 and 3.

Shown in Figures 2 and 3 are Nodes 1 to 4, which together provide a scaled service. Node 1 is designated as the master node in which the above-mentioned Config XDMS is provided. Also shown in Figures 2 and 3 are the Network Management Server (NMS) 5 (see Figure 3) and, since this embodiment is implemented in the context of an IMS network, an IMS Core 6.

According to draft-ietf-sip-xcapevent, a subscriber node signals to the notifier the resources it is interested in getting information. These resource selections are indicated by sending a URI-list to the notifier in a subscription body. The URIs of this list point to a collection, a document or an XCAP component. Relating this to the present embodiment as shown in Figures 2 and 3, Nodes 2 to 4 can be considered to be subscriber nodes, while Node 1 can be considered to be the notifier node.

For this purpose, configuration is required in the Config XDMS clients (Nodes 2 to 4) to set up node-specific SIP addresses, as well as informing them of the root URI to the Config XDMS (Node 1).

The setting up of the subscriptions is illustrated in Figure 2. In step S1-a a SUBSCRIBE message is sent from Node 2 to Node 1 (via the IMS Core 6) to subscribe Node 2 to updates in the configuration data stored in the Config XDMS of Node 1; the root URI to the Config XDMS is provided in this message, together with the SIP address of Node 2. This is followed by an initial NOTIFY message sent in step S1-b from Node 1 to Node 2, to alert Node 2 to the configuration data available from Node 1. Node 2 replies with an XCAP GET message in step S1-c to retrieve the initial configuration data. Further information relating to these messages can be found in draft-ietf-sip-xcapevent and RFC 4825. In a corresponding manner, steps S1-a to S1-c are repeated for Node 3 (steps S2-a to S2-c) and Node 4 (steps S3-a to S3-c). After this setup procedure, the master node (Node 1) will be able to communicate all changes via a NOTIFY message, as will now be explained.

The procedure to be applied for a configuration update is illustrated in Figure 3. In step P1 a configuration update is sent from the Network Management Server (NMS) 5 by way of an XCAP PUT message. The XCAP PUT message is sent via the IMS Core 6 (e.g. via an Aggregation Proxy in the IMS Core 6). XCAP PUT message is processed by the Config XDMS of Node 1, and appropriate update messages are sent to Nodes 2 to 4 by way of NOTIFY messages in steps P2 to P4 respectively. Once the subscription is established from the Nodes 2, 3 and 4 towards the master node (Node 1), when someone updates the configuration in the Config XDMS in Node 1 (master node), the configuration changes can be distributed directly to Node 2, 3 and 4 without going through the IMS Core 6 (although this depends on the settings in IMS core, i.e. if it is decided that the IMS Core 6 should do Record Routing, then it remains in the signalling path).

In the above embodiment, configuration of a scaled service is done towards one node of the scaled service, the master node (Node 1). The protocol transporting configuration changes between the NMS and master node (in step P1) can be any protocol, for example Hypertext Transfer Protocol (HTTP), HTTP Secure (HTTPS), XCAP, NETCONF (a network management protocol), Simple Network Management Protocol (SNMP) or Secure Shell (SSH).

The master node (Node 1) implements the Config XDMS and all other nodes of the scaled service (Nodes 2 to 4) implement Config XDMS clients. That is, all nodes of the service apart from the master node retrieve and receive the configuration data from the master node and need not to be separately configured from the NMS. The only configuration needed in the Config XDMS clients in this embodiment is a node-specific SIP address and the root URI to the Config XDMS.

All configuration data can be retrieved from the Config XDMS via XCAP according to standard XCAP procedures (see RFC4825) or subscribed to via SIP according to standard event xcap-diff procedures (see draft-ietf-sip-xcapevent).

An embodiment of the present invention is able to use the IMS/SIP/XCAP standards to configure and spread configuration changes over a scaled network. As mentioned above, one idea is to use the SIP event package 'xcap-diff' for distribution of configuration data between nodes. One node (or the OSS itself) is set up as master node with the "Config XDMS" service. The Config XDMS holds data about all nodes (in XML format). Every node, service or service inside a node is configured with a SIP address that is also used as XUI in XCAP and with the XCAP RootURI and SIP address for the master node. Each node has a SIP client and subscribes for changes of the configuration data in the Config XDMS. A node can use XCAP to fetch the full set of configuration data and receive notification of its configuration data via SIP Notify. The Config XDMS may both hold data that is common for many services, nodes or users as well as specific data for each.

An XDMS can handle one or several document types identified by unique Application Unique Identifiers (AUIDs). An XDMS can also handle several instances of a specific document type (AUID) which are identified by the XCAP User Identifier (XUI) and document name. This functionality is according to OMA XML Document Management standard (see OMA-TS-XDM_Core-V2_0-20080606-D) and can be useful for the Config XDMS in an embodiment of the present invention. That is, the service-, node-and user-specific configuration data can be specifically identified by the use of different AUIDs, XUIs and document names.

For example, the Config XDMS can be set up to handle several services. Each service has its specific AUID and each node of a scaled service has its specific config document identified by the AUID for the service and XUI representing the node.

Additionally, if a service has user-specific configuration data this can be specified in a document identified by the AUID for the service and XUI for the user or XUI representing the node and document name specific for the user.

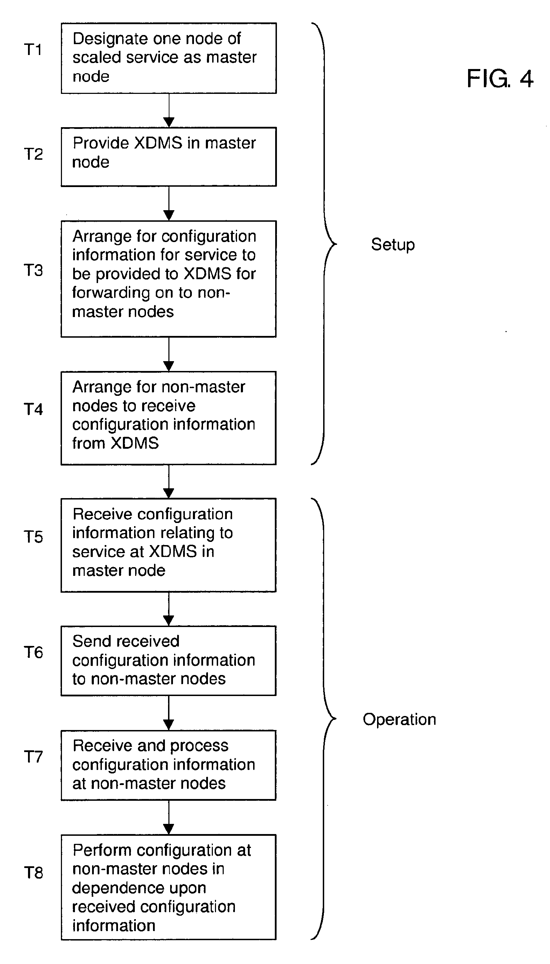

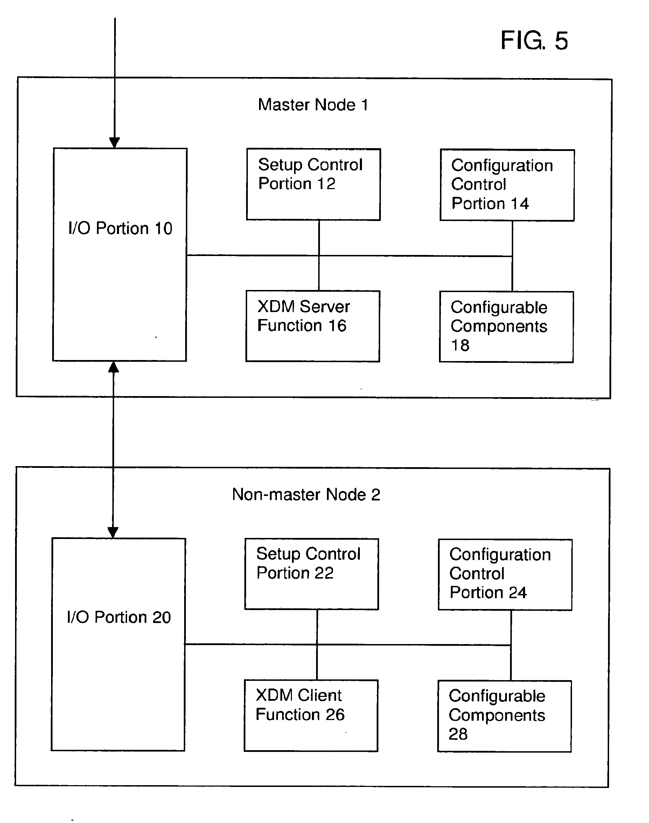

An overview of steps carried out in an embodiment of the present invention, and apparatus for carrying out those steps, is provided in Figures 4 and 5 respectively. The node of the scaled service that is designated during a set-up procedure as the Master Node 1 comprises an I/O Portion 10, a Setup Control Portion 12, a Configuration Control Portion 14, an XDMS Function 16, and one or more Configurable Components 18. The other nodes of the scaled service are designated as non-master nodes, one of which is illustrated as Non-master Node 2, each comprising an I/O Portion 20, a Setup Control Portion 22, a Configuration Control Portion 24, an XDM Client Function 26, and one or more Configurable Components 28. Any communication between the Master Node 1 and Non-master Node 2, and any communication between the Master Node 1 and other nodes of the network, are carried out by the I/O Portions 10 and 20 of the Master Node 1 and Non-master Node 2 respectively.

In step T1, one of the nodes of the scaled service is designated as the Master Node 1. In step T2, the XML Document Manager Server, XDMS, Function 16 is provided in the Master Node 1. In step T3 it is arranged for any configuration information relating to the scaled service to be provided to the XDMS Function 16 in the Master Node 1. In step T4 it is arranged for any received configuration information to be sent onwards to the Non-master Node 2 (or at least any of the configuration information that is relevant to it); this involves setting up the XDM Client Function 26 in the Non-master Node 2 and an associated relationship between the XDMS 16 and XDMC 26, for example a subscription-type relationship, so that the Non-master Node 2 will be informed of any configuration information relevant to it that is received at the Master Node 1. The configuration information may either be sent to all subscribed Non-master Nodes 2 following receipt at the Master Node 1, or notifications can instead be sent to all subscribed Non-master Nodes 2 such that those Non-master Nodes 2 are then able to request the configuration information subsequently from the Master Node 1. The above steps T1 to T4 can be considered to be a setup procedure, carried out under control of the Setup Control Portions 12 and 22 of the Master Node 1 and Non-master Node 2 respectively. A specific embodiment of the setup procedure is described above with reference to Figure 2.

Subsequent steps T5 to T8 are steps carried out during operation. In step T5, configuration information is received at the I/O Portion 10 of the Master Node 1 and forwarded to the XDMS 16. Based on the previous setup procedure, and by any suitable mechanism, configuration information is then forwarded in step T6 to the Non-master Node 2. This is received at the I/O Portion 20 of the Non-master Node 2 and forwarded to the XDMC 26 for processing. Any configuration information relevant to the configuration of the Configurable Components 28 of the Non-master Node 2 is sent to the Configuration Control Portion 24, and used in configuring the Configurable Components 28. Likewise, at the Master Node 1, any configuration information relevant to the configuration of the Configurable Components 18 of the Master Node 1 is sent to the Configuration Control Portion 14, and used in configuring the Configurable Components 18. A specific embodiment of the operation procedure is described above with reference to Figure 3.

An embodiment of the present invention has one or more of the following advantages:
- The NMS only need to have a connection to one node of the scaled service or one node for several services. Each node of the service(s) then request and subscribe to its configuration data from this central location.
- Also, the Config XDMS can handle configuration data that is common or specific for services, nodes and users.
- Technologies such as SIP, HTTP, XCAP which are already present within an IMS service can be used for real-time distribution of config data as well.
- Features such as patch operations (see draft-ietf-sip-xcapevent) and sub-not-etag (see draft-ietf-sip-subnot-etags-02 "An Extension to SIP Events for Conditional Event Notification") can be used as well to optimize the configuration data distribution.
- Standard mechanisms (IMS/SIP/XCAP) can be used to spread configuration data over several nodes.
- It is relatively straightforward for application developers to adapt to this since well known protocols are used. An Application Server normally already has a SIP and a HTTP stack.
- The configuration required at installation of a node is limited to a few items of data (own XUIs and XCAP Root URI and SIP address to the master node).
- The operator needs only to update the master node to configure any other node.
- The operator can use Subscribe for watcher info event "xcap-diff" towards the master node to monitor which nodes that are up and running.
- A possible extension could also be to convey Performance Management data (collected in XML files on each node) in the same way, and/or Fault Management data (e.g. alarms and notifications).

Although it could be argued that it is not wise to send OAM traffic over the normal traffic interface, it should be appreciated that it is only when the subscription is established that the message is routed via IMS Core; the subsequent notifications about configuration updates can be sent directly (no Record Routing used). The operator may set up a specific OAM IMS network if this becomes a common approach.

Although the above embodiment is described in the context of IMS and UMTS, it will be appreciated that IMS is not limited to mobile networks but is also applicable to fixed networks and other types of network altogether. It is also to be understood that an embodiment of the present invention is not limited to its application within the context of IMS or UMTS.

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

## Claims

1. A method of communicating configuration information to a network service that is scaled over a plurality of network nodes (1, 2, 3, 4), comprising:
designating (T1) one of the nodes of the plurality (1, 2, 3, 4) as a master node (1),
providing (T2) an XML Document Manager Server, XDMS, function (16) in the master node (1),
arranging (T3) for the configuration information to be provided to the XDMS function (16) in the master node (1),
arranging (T4) for the XDMS function (16) in the master node (1) to communicate the configuration information to non-master nodes (2, 3, 4), or at least any of the configuration information that is relevant to them, such that configuration can be performed in each node of the plurality (1, 2, 3, 4) based on the configuration information, and
using the Session Initiation Protocol, SIP, event notification framework for notifying (S1-b, S2-b, S3-b, P2, P3, P4) each of the non-master nodes (2, 3, 4) of receipt at the master node of the configuration information.

2. A method as claimed in claim 1, comprising:
subscribing (S1-a, S2-a, S3-a) each of the non-master nodes (2, 3, 4) to receive a notification (S1-b, S2-b, S3-b, P2, P3, P4) from the XDMS function (16) in the master node (1) following receipt at the master node (1) of the configuration information, for example by using SUBSCRIBE and NOTIFY messages.

3. A method as claimed in claim 1 or 2, comprising:
using the "xcap-diff" event package relating to the XML Configuration Access Protocol, XCAP.

4. A method as claimed in claim 1, 2 or 3, comprising:
using an XML Configuration Access Protocol, XCAP, procedure for communicating the configuration information from the XDMS function (16) in the master node (1) to each of the non-master nodes (2, 3, 4), for example using an XCAP GET message.

5. A method as claimed in claim 4, comprising, for use in the XCAP procedure:
allocating each non-master node (2, 3, 4) its own SIP address and informing it of the root URI to the XDMS function in the master node (1).

6. A method as claimed in any preceding claim, wherein the configuration information comprises updates to previously-received configuration information.

7. A method as claimed in any preceding claim, wherein the XDMS function (16) is arranged to handle a plurality of different services, and comprising:
differentiating the services with reference to Application Unique Identifiers, AUIDs, associated with the respective services.

8. A method as claimed in any preceding claim, wherein the XDMS function (16) is arranged to handle a plurality of different nodes/users, and comprising:
differentiating the nodes/users with reference to XCAP User Identifiers, XUI, associated with the respective nodes/users, optionally also with reference to a document name associated with the node/user.

9. A method as claimed in any preceding claim, wherein the master node (1) comprises a plurality of nodes.

10. A method of configuring a network service that is scaled over a plurality of network nodes (1, 2, 3, 4), comprising using a method as claimed in any preceding claim to communicate configuration information to the nodes, and configuring the nodes in dependence upon that information.

11. An apparatus for use as or in a designated master node (1) of a network service that is scaled over a plurality of nodes (1, 2, 3, 4), the apparatus comprising an XML Document Manager Server, XDMS, function (16) arranged to receive configuration information relating to the network service on behalf of all nodes of the plurality (1, 2, 3, 4) and further arranged to communicate the configuration information to non-master nodes (2, 3, 4) of the network service, or at least any of the configuration information that is relevant to them, and the apparatus being adapted to function as a master node in the manner as defined by the subject-matter of independent claim 1.

12. An apparatus for use as or in a non-master node (2, 3, 4) of a network service that is scaled over a plurality of nodes (1, 2, 3, 4), one of the other nodes of the plurality (1, 2, 3, 4) being designated as a master node (1), the apparatus comprising an XML Document Manager Client, XDMC, function (26), the XDMC function (26) being arranged to receive configuration information from an XML Document Manager Server, XDMS, function (16) provided in the master node (1), and to arrange for a configuration of the non-master node (2, 3, 4) to be performed based on the received configuration information, wherein the XDMC function (26) is arranged to use the Session Initiation Protocol, SIP, event notification framework for being notified of receipt at the XDMS function (16) of the configuration information, and the apparatus being adapted to function as the non-master node in the manner as defined in independent claim 1.

13. A program for controlling an apparatus to perform a method as claimed in any one of claims 1 to 10.

14. A storage medium containing a program as claimed in claim 13.

## Patentansprüche

1. Verfahren zum Kommunizieren von Konfigurationsinformation an einen Netzdienst, der über eine Vielzahl von Netzknoten (1, 2, 3, 4) skaliert ist, Folgendes umfassend:
Designieren (T1) von einem der Knoten der Vielzahl (1, 2, 3, 4) als einen Master-Knoten (1),
Bereitstellen (T2) einer XDMS(XML-Dokument-Manager-Server)-Funktion (16) im Master-Knoten (1),
Anordnen (T3), dass die Konfigurationsinformation der XDMS-Funktion (16) im Master-Knoten (1) bereitgestellt wird,
Anordnen (T4), dass die XDMS-Funktion (16) im Master-Knoten (1) die Konfigurationsinformation an Nicht-Master-Knoten (2, 3, 4) kommuniziert, oder mindestens einen Teil der Konfigurationsinformation, der für sie relevant ist, sodass Konfiguration in jedem Knoten der Vielzahl (1, 2, 3, 4) auf der Basis der Konfigurationsinformation ausgeführt werden kann, und
Verwenden des SIP(Sitzungsinitiationsprotokoll)-Ereignisbenachrichtigungsrahmens, um jeden der Nicht-Master-Knoten (2, 3, 4) über den Empfang der Konfigurationsinformation am Master-Knoten zu benachrichtigen (S1-b, S2-b, S3-b, P2, P3, P4).

2. Verfahren nach Anspruch 1, Folgendes umfassend:
Subskribieren (S1-a, S2-a, S3-a) eines jeden der Nicht-Master-Knoten (2, 3, 4) für das Empfangen einer Benachrichtigung (S1-b, S2-b, S3-b, P2, P3, P4) von der XDMS-Funktion (16) im Master-Knoten (1) nach Empfang der Konfigurationsinformation am Master-Knoten (1), indem zum Beispiel SUBSCRIBE- und NOTIFY-Nachrichten verwendet werden.

3. Verfahren nach Anspruch 1 oder 2, Folgendes umfassend:
Verwenden des Ereignispakets "xcap-diff", das das XML-Konfigurationszugangsprotokoll, XCAP, betrifft.

4. Verfahren nach Anspruch 1, 2 oder 3, Folgendes umfassend:
Verwenden einer XCAP(XML-Konfigurationszugangsprotokoll)-Prozedur zum Kommunizieren der Konfigurationsinformation von der XDMS-Funktion (16) im Master-Knoten (1) an jeden der Nicht-Master-Knoten (2, 3, 4) zum Beispiel unter Verwendung einer XCAP GET-Nachricht.

5. Verfahren nach Anspruch 4, zur Verwendung in der XCAP-Prozedur, Folgendes umfassend:
Zuweisen seiner eigenen SIP-Adresse an jeden Nicht-Master-Knoten (2, 3, 4), und ihn über die Wurzel-URI an die XDMS-Funktion im Master-Knoten (1) informieren.

6. Verfahren nach einem vorhergehenden Anspruch, worin die Konfigurationsinformation Aktualisierungen von vorher empfangener Konfigurationsinformation umfasst.

7. Verfahren nach einem vorhergehenden Anspruch, worin die XDMS-Funktion (16) dazu angeordnet ist, eine Vielzahl von verschiedenen Diensten zu handhaben, und Folgendes umfassend:
Differenzieren der Dienste mit Bezug auf eindeutige Anwendungskennungen, AUIDs, die mit den jeweiligen Diensten assoziiert sind.

8. Verfahren nach einem vorhergehenden Anspruch, worin die XDMS-Funktion (16) dazu angeordnet ist, eine Vielzahl von verschiedenen Knoten/Benutzern zu handhaben, und Folgendes umfassend:
Differenzieren der Knoten/Benutzer mit Bezug auf XCAP-Benutzerkennungen, XUI, die mit den jeweiligen Knoten/Benutzern assoziiert sind, optional auch mit Bezug auf einen mit dem Knoten/Benutzer assoziierten Dokumentnamen.

9. Verfahren nach einem vorhergehenden Anspruch, worin der Master-Knoten (1) eine Vielzahl von Knoten umfasst.

10. Verfahren zum Konfigurieren eines Netzdienstes, der über eine Vielzahl von Netzknoten (1, 2, 3, 4) skaliert ist, Folgendes umfassend: Verwenden eines Verfahrens nach einem vorhergehenden Anspruch, um Konfigurationsinformation an die Knoten zu kommunizieren, und Konfigurieren des Knotens in Abhängigkeit von dieser Information.

11. Vorrichtung zur Verwendung als ein oder in einem designierten Master-Knoten (1) eines Netzdienstes, der über eine Vielzahl von Knoten (1, 2, 3, 4) skaliert ist, wobei die Vorrichtung eine XDMS(XML-Dokument-Manager-Server)-Funktion (16) umfasst, die dazu angeordnet ist, den Netzdienst betreffende Konfigurationsinformation zugunsten von allen Knoten der Vielzahl (1, 2, 3, 4) zu empfangen, und außerdem dazu angeordnet ist, die Konfigurationsinformation an Nicht-Master-Knoten (2, 3, 4) des Netzdienstes zu kommunizieren, oder mindestens einen Teil der Konfigurationsinformation, der für sie relevant ist, und die Vorrichtung dazu angepasst ist, als ein Master-Knoten auf die Art und Weise zu funktionieren, wie durch den Gegenstand des unabhängigen Anspruchs 1 definiert ist.

12. Vorrichtung zur Verwendung als ein oder in einem Nicht-Master-Knoten (2, 3, 4) eines Netzdienstes, der über eine Vielzahl von Knoten (1, 2, 3, 4) skaliert ist, wobei einer der anderen Knoten der Vielzahl (1, 2, 3, 4) als ein Master-Knoten (1) designiert ist, wobei die Vorrichtung eine XDMC(Dokument-Manager-Client)-Funktion (26) umfasst, wobei die XDMC-Funktion (26) dazu angeordnet ist, Konfigurationsinformation von einer im Master-Knoten (1) bereitgestellten XDMS(XML-Dokument-Manager-Server)-Funktion (16) zu empfangen, und anzuordnen, dass eine Konfiguration des Nicht-Master-Knotens (2, 3, 4) auf der Basis der empfangenen Konfigurationsinformation ausgeführt wird, worin die XDMC-Funktion (26) dazu angeordnet ist, den SIP(Sitzungsinitiationsprotokoll)-Ereignisbenachrichtigungsrahmen zu verwenden, um über den Empfang der Konfigurationsinformation an der XDMS-Funktion (16) benachrichtigt zu werden, und die Vorrichtung dazu angepasst ist, als der Nicht-Master-Knoten auf die Art und Weise zu funktionieren, wie im unabhängigen Anspruch 1 definiert ist.

13. Programm zum Steuern einer Vorrichtung, um ein Verfahren nach einem der Ansprüche 1 bis 10 auszuführen.

14. Speichermedium, das ein Programm nach Anspruch 13 enthält.

## Revendications

1. Procédé de communication d'informations de configuration à un service de réseau qui est dimensionné sur une pluralité de noeuds de réseau (1, 2, 3, 4), consistant à :
désigner (T1) l'un des noeuds de la pluralité (1, 2, 3, 4) en tant que noeud maître (1) ;
fournir (T2) une fonction de serveur de gestion de document XML, XDMS, (16) dans le noeud maître (1) ;
mettre en oeuvre un agencement (T3) pour les informations de configuration à fournir à la fonction de serveur XDMS (16) dans le noeud maître (1) ;
mettre en oeuvre un agencement (T4) pour la fonction de serveur XDMS (16) dans le noeud maître (1), en vue de communiquer les informations de configuration à des noeuds non maîtres (2, 3, 4), ou au moins l'une quelconque des informations de configuration pertinente pour ces noeuds, de sorte qu'une configuration peut être mise en oeuvre dans chaque noeud de la pluralité (1, 2, 3, 4) sur la base des informations de configuration ; et
utiliser l'infrastructure de notification d'événements de protocole d'ouverture de session SIP pour signaler (S1-b, S2-b, S3-b, P2, P3, P4), à chacun des noeuds non maîtres (2, 3, 4), la réception, au niveau du noeud maître, des informations de configuration.

2. Procédé selon la revendication 1, consistant à :
abonner (S1-a, S2-a, S3-a) chacun des noeuds non maîtres (2, 3, 4) en vue de recevoir une notification (S1-b, S2-b, S3-b, P2, P3, P4) à partir de la fonction de serveur XDMS (16) dans le noeud maître (1), suite à la réception, au niveau du noeud maître (1), des informations de configuration, par exemple en utilisant des messages d'abonnement « SUBSCRIBE » et de notification « NOTIFY ».

3. Procédé selon la revendication 1 ou 2, consistant à :
utiliser le paquet d'événement « xcap-diff » relatif au protocole d'accès de configuration XML, XCAP.

4. Procédé selon la revendication 1, 2 ou 3, consistant à :
utiliser une procédure de protocole d'accès de configuration XML, XCAP, pour communiquer les informations de configuration, de la fonction de serveur XDMS (16) dans le noeud maître (1) à chacun des noeuds non maîtres (2, 3, 4), par exemple en utilisant un message d'obtention de protocole XCAP « XCAP GET ».

5. Procédé selon la revendication 4, consistant à, en vue d'une utilisation dans la procédure XCAP :
affecter, à chaque noeud non maître (2, 3, 4), sa propre adresse de protocole SIP, et en informer chaque noeud non maître l'identifiant URI racine vers la fonction de serveur XDMS dans le noeud maître (1).

6. Procédé selon l'une quelconque des revendications précédentes, dans lequel les informations de configuration comportent des mises à jour d'informations de configuration précédemment reçues.

7. Procédé selon l'une quelconque des revendications précédentes, dans lequel la fonction de serveur XDMS (16) est agencée de manière à traiter une pluralité de services distincts, et consistant à :
différencier les services en référence à des identifiants uniques d'applications, AUID, associés aux services respectifs.

8. Procédé selon l'une quelconque des revendications précédentes, dans lequel la fonction de serveur XDMS (16) est agencée de manière à gérer une pluralité de noeuds / utilisateurs distincts, et consistant à :
différencier les noeuds / utilisateurs en référence à des identifiants d'utilisateurs de protocole XCAP, XUI, associés aux noeuds / utilisateurs respectifs, éventuellement également en référence à un nom de document associé au noeud / utilisateur.

9. Procédé selon l'une quelconque des revendications précédentes, dans lequel le noeud maître (1) comprend une pluralité de noeuds.

10. Procédé de configuration d'un service de réseau qui est dimensionné sur une pluralité de noeuds de réseau (1, 2, 3, 4), comprenant l'utilisation d'un procédé selon l'une quelconque des revendications précédentes en vue de communiquer des informations de configuration aux noeuds, et la configuration des noeuds en fonction desdites informations.

11. Appareil destiné à être utilisé en tant que, ou dans, un noeud maître désigné (1) d'un service de réseau qui est dimensionné sur une pluralité de noeuds (1, 2, 3, 4), l'appareil comprenant une fonction de serveur de gestion de document XML, XDMS, (16) agencée de manière à recevoir des informations de configuration connexes au service de réseau pour le compte de la totalité des noeuds de la pluralité (1, 2, 3, 4), et en outre agencée de manière à communiquer les informations de configuration à des noeuds non maîtres (2, 3, 4) du service de réseau, ou au moins l'une quelconque des informations de configuration qui est pertinente pour lesdits noeuds, l'appareil étant apte à fonctionner en qualité de noeud maître de la manière définie par l'objet de la revendication indépendante 1.

12. Appareil destiné à être utilisé en tant que, ou dans, un noeud non maître (2, 3, 4) d'un service de réseau qui est dimensionné sur une pluralité de noeuds (1, 2, 3, 4), l'un des autres noeuds de la pluralité (1, 2, 3, 4) étant désigné en qualité de noeud maître (1), l'appareil comprenant une fonction de client de gestion de document XML, XDMC, (26), la fonction de client XDMC (26) étant agencée de manière à recevoir des informations de configuration en provenance d'une fonction de serveur de gestion de document XML, XDMS, (16) délivrée dans le noeud maître (1), et à mettre en oeuvre un agencement pour une configuration du noeud non maître (2, 3, 4) devant être exécutée sur la base des informations de configuration reçues, dans lequel la fonction de client XDMC (26) est agencée de manière à utiliser l'infrastructure de notification d'événements de protocole d'ouverture de session SIP en vue d'être informée de la réception, au niveau de la fonction de serveur XDMS (16), des informations de configuration, et l'appareil étant apte à fonctionner en tant que noeud non maître de la manière définie dans la revendication indépendante 1.

13. Programme destiné à commander à un appareil de mettre en oeuvre un procédé selon l'une quelconque des revendications 1 à 10.

14. Support de stockage contenant un programme selon la revendication 13.
